Europäisches Patentamt

(19) European Patent Office

Office européen des brevets

(11) Publication number: **0 110 050**
B1

(12) **EUROPEAN PATENT SPECIFICATION**

(45) Date of publication of patent specification: 01.06.88.

(21) Application number: 83109589.8

(22) Date of filing: 27.09.83

(51) Int. Cl.⁴: **G 11 B 5/265,** G 11 B 5/02, G 11 B 19/12

(54) **Disc drive for flexible discs with different track widths.**

(30) Priority: 01.10.82 JP 173066/82
01.10.82 JP 173067/82

(43) Date of publication of application:
13.06.84 Bulletin 84/24

(45) Publication of the grant of the patent:
01.06.88 Bulletin 88/22

(84) Designated Contracting States:
DE FR GB

(56) References cited:
US-A-3 353 168
Patent Abstracts of Japan Vol. 6, no. 229, 16
november 1982 & JP-A-57-130223
DESIGN ENGINEERING, vol. 52, no. 5, May
1981, Waseca, USA N. SCLATER "The option of
rotating disk memories", pages 41-44
IBM TECHNICAL DISCLOSURE BULLETIN, vol.
25, no. 2, July 1982, New York, USA C.M.
CRUSE et al. "Universal flexible disk", page 468
WIRELESS WORLD, vol. 88, no. 1561, October
1982, Olchester, GB J.R. WATKINSON "Floppy-
disc drives", pages 80-82, 84 *

(73) Proprietor: MITSUBISHI DENKI KABUSHIKI
KAISHA
2-3, Marunouchi 2-chome Chiyoda-ku
Tokyo 100 (JP)

(72) Inventor: Isozaki, Shin c/o Mitsubishi Denki K.
K.
Computer Works 325, Kamimachiya
Kamakura-shi Kanagawa (JP)
Inventor: Sasaki, Masaru c/o Mitsubishi Denki
K. K.
Computer Works 325, Kamimachiya
Kamakura-shi Kanagawa (JP)
Inventor: Hosaka, Shuroku c/o Mitsubishi Denki
K. K.
Computer Works 325, Kamimachiya
Kamakura-shi Kanagawa (JP)

(74) Representative: Eisenführ & Speiser
Martinistrasse 24
D-2800 Bremen 1 (DE)

Courier Press, Leamington Spa, England.

## Description

The invention relates to a magnetic storage device for receiving a flexible disc record medium, comprising a magnetic head having writing/reading and erasing cores; a spindle motor for rotating an inserted record medium at a predetermined rotating speed determined by a spindle motor drive circuit; magnetic head positioning means for positioning the magnetic head in radial direction of the record medium to any track on the record medium; and track density discrimination means for recognizing the track density type of an inserted record medium.

In recent years, development in magnetic recording technology is remarkable, and recording density of information device such as a magnetic disc device or a flexible disc device has been improved significantly.

In order to realize the high recording density, method of raising the line recording density per track and also method of raising the track density are taken. In a flexible disc device of exchangeable medium type used as a file, too, the track density has been rapidly improved. Although the number of tracks per inch (hereinafter referred to as TPI) of 48 TPI was usually used in a small device of prior art, use of 96 TPI has been recently increased and this tendency is increasing further.

A problem occurs in this tendency. Change in the track density results in change of the device as a whole, and since it is difficult that medium recorded in a new device of 96 TPI be reproduced or recorded in conventional device of 48 TPI, the medium must be used only in the original device at the present practice. Accordingly, if media recorded in devices of 48 TPI and 96 TPI can be mutually recorded and reproduced, the economical merit will become very large.

Prior art relating to a flexible disc device of high density will now be described. Such devices are generally described in Design Engineering, May 1981, pages 41—44, and in Wireless World, October 1982, pages 80—84.

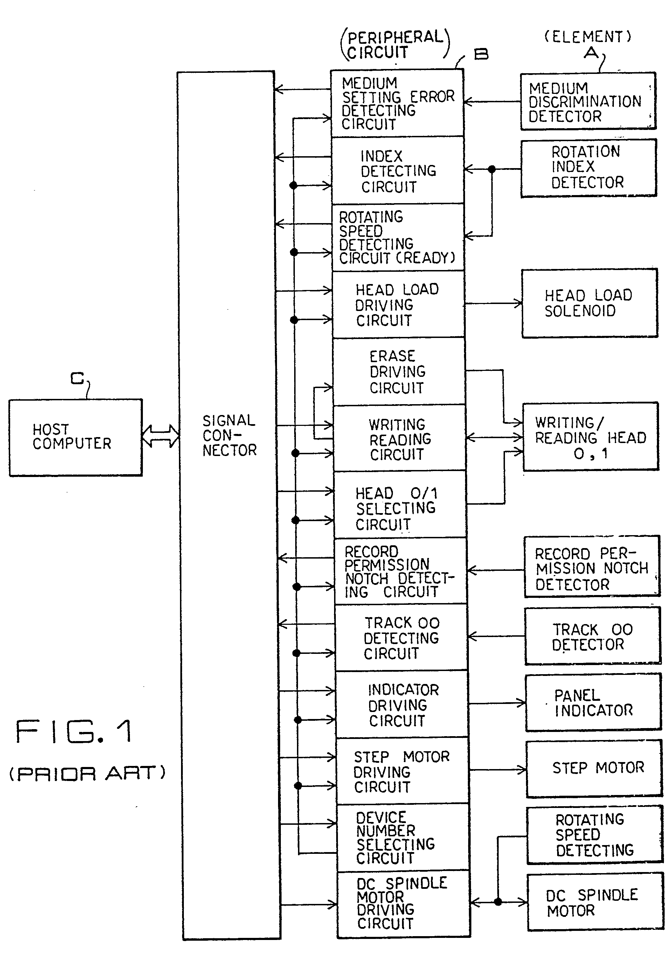

In order to realize a flexible disc of high density, some conventional device distinguishes difference in coercive force of recording medium or magnetic property of coated film thickness. In such a device, a notch is provided at a specific position of a jacket so as to prevent the data error by use of high-density medium in a conventional device or inversely use of ordinary medium in a high-density device and to detect the use mistake. The device is so constituted that a medium discrimination detector A informs an operator of mistake in setting a flexible disc, and the information is transmitted through a medium setting error detecting circuit B and a signal connector to a host computer C as shown in Fig. 1. In a series of operation, the use mistake is informed to the operator and the host computer C so as to inhibit the writing or reading action.

In addition, Fig. 1 shows many circuits and elements without reference numeral. Since basic function of these elements is known by those skilled in the art and little part relates directly to this invention, description of these elements is omitted now and will be performed when required.

Other device of 96 TPI can be used for both high density medium and ordinary medium. In such a device, use of inside track having high line recording density is inhibited at using ordinary medium and writing current is changed corresponding to difference in property of medium.

However, such discrimination signal is not used for changing the track density in the prior art. Fig. 1 shows a conventional example particularly realizing the high density, and use device commonly used in the prior art had no medium discrimination detector.

Regarding the compatibility between devices or media being different in track width, information of 48 TPI written in the same medium property i.e. the same line recording density can be read by a device of 96 TPI in prior art. This is because the center portion of track in 48 TPI is made coincident with that of track of even number in 96 TPI.

On the contrary, information written in a device of 96 TPI cannot be read by a device of 48 TPI in prior art. If information is written only in track of even number in 96 TPI, effective width of information track becomes 1/2 but appreciable trouble does not occur. However, various noise such as old information in track position of odd number is read by wide head of 48 TPI in this state, and the disturbing noise decreases the signal-to-noise ratio.

Accordingly, in prior art, a disc recorded in a device of 48 TPI can be read by a device of 48 TPI; a disc recorded in 96 TPI cannot be read by 48 TPI. That is, the compatibility of mutual medium writing does not exist in the strict meaning.

Summary of the Invention

In order to eliminate above-mentioned disadvantages of conventional flexible disc devices, this invention intends to provide system such as small computer wherein a large amount of software store contained in a large number of discs prepared by an ordinary flexible disc device remains intact and can be successively read and written again for use in new system.

This invention provides an approach to rewrite ordinary disc of 48 TPI in a new large-capacity device of 96 TPI so that it can be read also in conventional device of 48 TPI, for example, this invention proposes following requirements.

For solving the object of the present inventon a magnetic storage device is provided as in claim 1.

A preferred embodiment of the present invention which is being adapted for receiving one of two different types of recording media having either high or low track density, in which the writing/reading core of the magnetic head is provided with a writing/reading gap, and in which the first pair of erasing cores comprises erasing gaps at both sides to the writing/reading core is characterized in that a second pair of erasing cores is provided having erasing gaps at both sides adjacent to the first pair of erasing cores; that in case of a record medium having a high track density only the first pair of erasing cores is energized, wheras in case of a record medium having a low track density both pairs of erasing cores are energized; and that the energization of the erasing cores is selected in accordance with the discrimination signal of the track density discrimination means.

Further advantageous embodiments of the present invention are defined in the sub-claims as appended.

Embodiments of the invention will now be described in connection with the enclosed drawings.

Fig. 1 is a block diagram of whole system including a flexible disc device in the prior art;

Fig. 2 is a system constitution diagram including a schematic view of a flexible disc device of the invention;

Fig. 3 is a block diagram of whole system including a flexible disc device as an embodiment of the invention;

Fig. 4 is a plan view of a medium sliding surface of a head assembly for a flexible disc device in the prior art;

Fig. 5 is a plan view of magnetic gap arrangement of a magnetic head sliding surface for a flexible disc device as an embodiment of the invention;

Fig. 6 is a diagram illustrating constitution of an erasing head drive circuit as an embodiment of the invention;

Fig. 7 is a diagram illustrating condition of a step motor drive circuit as an embodiment of the invention;

Fig. 8 is a perspective view of core assembly portion of the magnetic head assembly in Fig. 5;

Fig. 9 is a diagram illustrating record regenerative state of a magnetic head assembly as an embodiment of the invention;

Fig. 10 is a plan view of core portion in a magnetic head assembly as another embodiment of the invention;

Fig. 11 is a perspective view of core assembling portion of the magnetic core assembly in Fig. 10;

Fig. 12A is a perspective view of a prior art whole jacket including a flexible disc medium;

Fig. 12B is a whole jacket including a flexible disc medium of exclusive use for 96 TPI; and

Figs. 13A and 13B are perspective views showing the optical and mechanical means for detecting notch as shown in Figs. 12A and 12B, respectively.

Detailed Description of the Preferred Embodiments

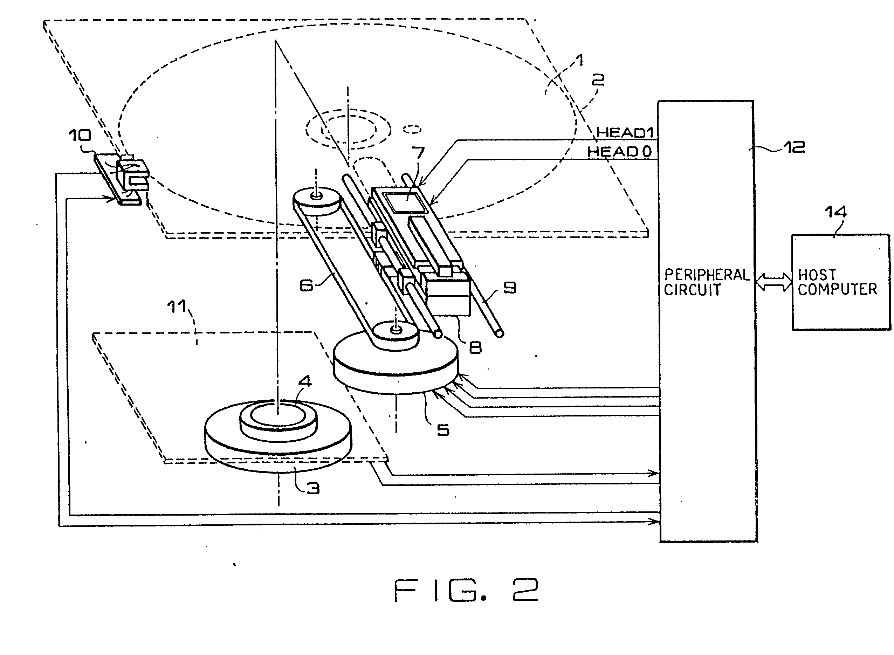

A flexible disc device as an embodiment of the present invention is a magnetic record information memory of rotary type which is compact and convenient as shown in a schematic view of Fig. 2. A storage medium of the device is an exchangeable flexible disc cartridge, that is, a disc 1 which is formed by applying magnetic recording medium on a plastic film of polyester and enclosed in a rectangular jacket 2.

The flexible disc 1 within the jacket is rotated by a motor 3 and a spindle 4 at a constant speed specified corresponding to the disc 1 in use.

A magnetic head 7 is one in number at one-surface type. The magnetic head 7 in working is contacted with the disc 1. A carriage 8 to hold the head 7 is moved on guide rods 9 in the direction of disc diameter. Positioning of the head is performed by a step motor 5 through a steel belt mechanism 6 such as shown in Fig. 2.

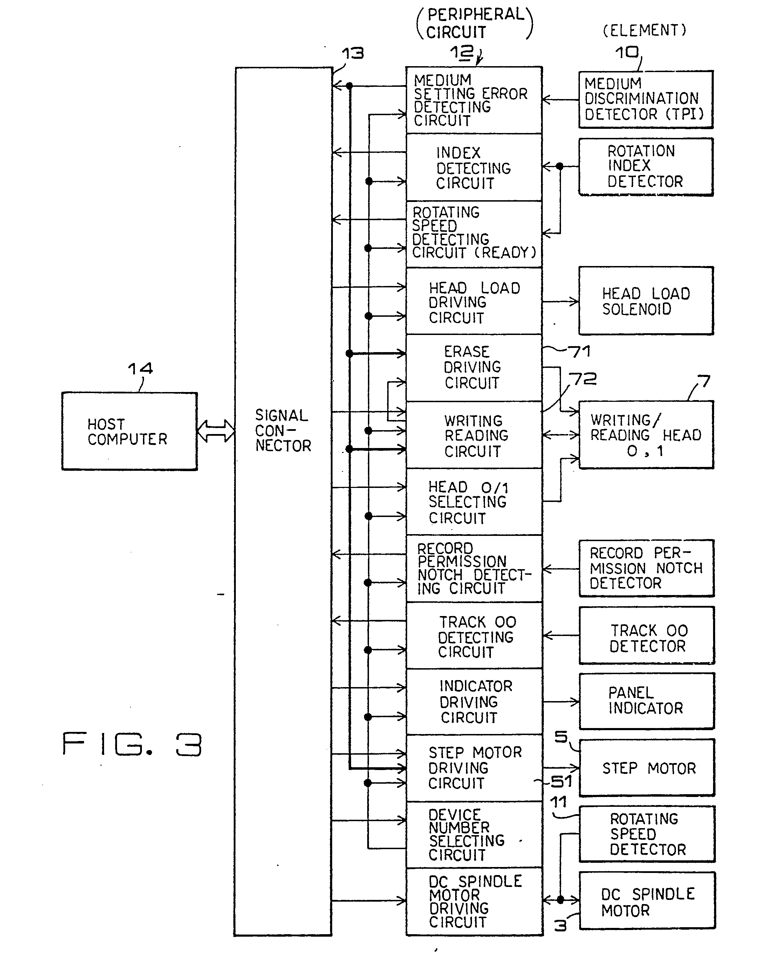

In Fig. 2, reference numeral 10 designates a medium discrimination detector utilizing a detector for detecting medium attaching error in the prior art. Function of the medium discrimination detector 10 in the prior art and the invention will be described later. Numeral 11 designates a rotating speed detector for the DC spindle motor 3. Numeral 12 designates a peripheral circuit for receiving and sending data and control signals and processing them between the above mentioned DC spindle motor 3, step motor 5, head 7, medium discrimination detector 10 and rotating speed detector 11. The peripheral circuit 12 includes various circuits as shown in Fig. 3. Numeral 14 designates a host computer, and a personal computer known in the prior art, such as IBM 5150 type, Apple III, Mult. 16 of Apple Co. or PC-8001 of Nippon Electric Co. can be used therefor. Detailed description of the host computer 14 will be omitted.

An embodiment of the invention will now be described.

Fig. 3 shows a block diagram of a flexible disc device according to the invention, in which same reference numerals in Fig. 2 denote the same or like parts.

The medium discrimination detector 10 distinguishes shape of the flexible disc 2 shown in Fig. 2, i.e. a notch or a hole using an optical sensor. A disc having a notch represents a new type of high density e.g. a disc of 96 TPI. This detection can be performed also using a microswitch or the like.

Electric signal which is detected by the detector 10 and discriminated by the medium discrimination circuit 12 for representing the high track density is transmitted through a signal connector 13 to a disc controller in the computer. The electric signal is also supplied to an erasing head current drive circuit 71, a writing/reading circuit 72 and a step motor drive circuit 51 as shown in thick solid line of Fig. 3.

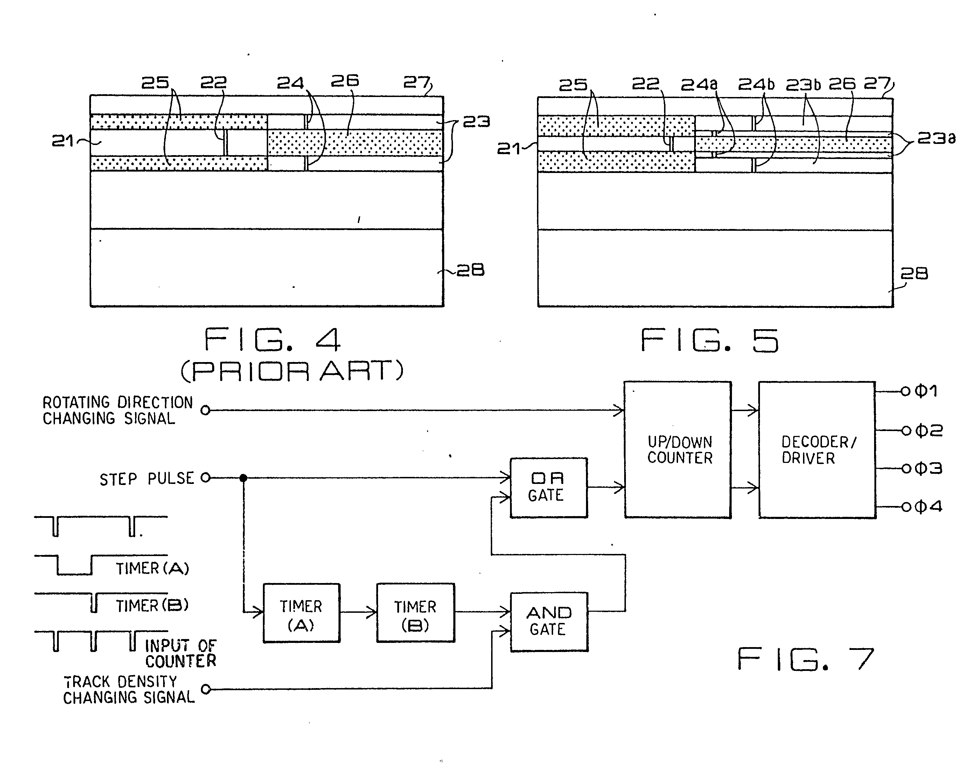

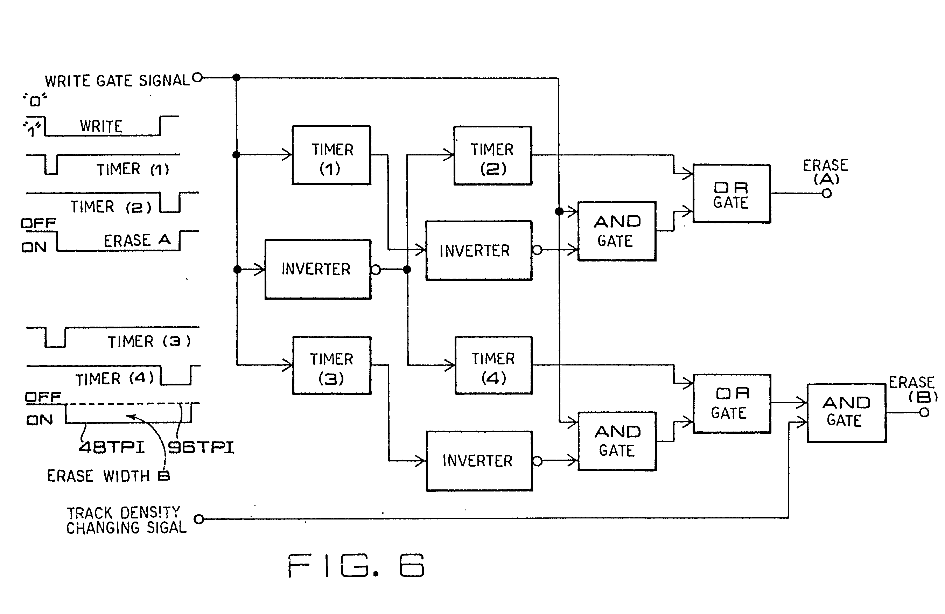

A magnetic head 7 used in a conventional device has the magnetic pole structure as shown in Fig. 4, but that used in an embodiment of the invention has the pole structure as shown in Fig. 5. In Figs. 4 and 5, numeral 21 designates a writing/reading head core, numeral 22 a writing/reading gap, numeral 23 an erasing head core, and numeral 24 an erasing gap. In the head of the invention as shown in Fig. 5, the erasing head and the gap are halved into 23a, 23b and 24a, 24b, respectively. In addition, numeral 25, 26 designate non-magnetic spacers, and numerals 27, 28 designate slide shoes.

The erasing head drive circuit 71 is constituted as shown in Fig. 6. For example, is the track density changing signal made "I" signal at 48 TPI, current flows through both erase A and erase B at recording state and erasing gaps 24a and 24b are energized, theeby old signal is erased throughout wide regions corresponding to 48 TPI.

When the track density changing signal shows 96 TPI, gating is effected so that current corresponding to erase B does not flow, and only gap 24a corresponding to erase A is energized at recording state, thereby narrow region corresponding to 96 TPI is erased.

New recording signal is written at the writing/reading gap 22 and becomes the optimum width for 96 TPI. Therefore, if recording of 48 TPI is effected in this state, width becomes about a half in comparison to writing state using an ordinary device of 48 TPI. If the signal is read by ordinary device of 48 TPI, the signal output becomes about a half. However, since the disc contacting to the wide gap 22 of device of 48 TPI is widely erased by the above-mentioned erasing gaps 24a, 24b, noise component is not regenerated in the wide head 21 and reduction of the signal-to-noise ratio is about an half and no problem occurs as ordinary device of 48 TPI. The track written without energizing the gap 24b produces no problem as long as read by a new head. However, if the track is read by the wide head of 48 TPI, old signal remaining without erase at both sides is superposed as noise component thereby the signal-to-noise ratio is significantly reduced and the reading becomes difficult.

Circuit of Fig. 6 includes timers 1, 2, 3 and 4 as an erasing current delay circuit for compensating distance between the record regenerative gap and the erase gap. These timers are not so relevant to performance of the invention that description be omitted.

As above described, if heads in Fig. 5 and circuits in Fig. 6 are combined, information recorded in a new device of 96 TPI can be reproduced by a conventional device of 48 TPI without producing any problem.

When heads in Fig. 5 are used as a device of 96 TPI, width of the writing/reading gap 22 and width of the erase gap 24a are optimized to the track density of 96 TPI thereby any problem does not occur. A disc having conventional track density reading width of 48 TPI is disposed at about the center of recording width of 48 TPI if the writing/reading gap 22 of head of Fig. 5 is disposed to the track of even number of 96 TPI, thereby stable reading is possible without taking other signal.

The writing/reading circuit 72 does not produce appreciable problem even when changing the track density is changed. In this embodiment, at changing state to the high track density the line recording density is also changed twice by using special medium of high density. In this constitution, the recording current becomes suitable to the high-density medium and the data transfer frequency becomes twice as the recording density increases, thereby band width of regenerative circuit suited thereto is also changed.

If the host computer system 13 produces feed signal for 48 TPI at feed pitch being twice the 96 TPI in accordance with the discrimination signal of high track density medium, the step motor drive circuit 51 does not need to act as a disc device. However, if control at the host computer 13 is required at the same procedure as conventional device for 48 TPI, this embodiment can feed the step motor 5 by two pulses per one pulse of the track feed.

In circuit constitution as shown in Fig. 7, corresponding to input of one step pulse the up/down counter in 48 TPI detection is counted twice thus the driver of step motor 5 is driven by two steps. If the device is reset initially to 00 track, it stops only at even track position in 96 TPI therefore coincides with nearly the center of recording track of conventional disc of 48 TPI.

Another embodiment of the invention will be described. Although the track density is optically detected by the jacket shape in the above description, the record content may be read at 96 TPI after inserting the disc, and the discrimination is performed as 96 TPI when data can be properly read at almost tracks and as 48 TPI when data can be read at even tracks and not read at odd tracks. If the line recording medium is different, the discrimination is performed as 96 TPI when data can be read at the high density and as 48 TPI when data can be read at conventional density. Record regeneration, track feed or the like can be further controlled at the discrimination density until the disc is changed.

Although the description was made only between 96 TPI and 48 TPI in the above embodiment, the same principle holds between the track density in multiple of integer, for example, between 144 TPI and 48 TPI. In this case, data can be properly read at one track per three tracks and the bidirectional compatibility of written data can be obtained by erasing at wide region.

Further embodiment of the invention is realized by means for changing the disc rotating speed by the track density discrimination signal when both the track density and the line recording density are changed, for example, device for varying the stable rotating speed of direct drive type DC servomotor by changing a potential divider of reference voltage so as to raise the line recording density without varying the transfer frequency.

According to an embodiment of the invention as above described, a magnetic head having variable erase width is used, erase width corresponding to an inserted disc is varied with changes in erase drive circuit, and bidirectional data compatability in writing and reading at recording system of track width in two sorts or more is secured by changing necessary circuits. Accordingly, the invention has an advantage that a large amount of software stored on the flexible disc by old computer system remains in a new flexible disc device to constitute a new computer system of large capacity.

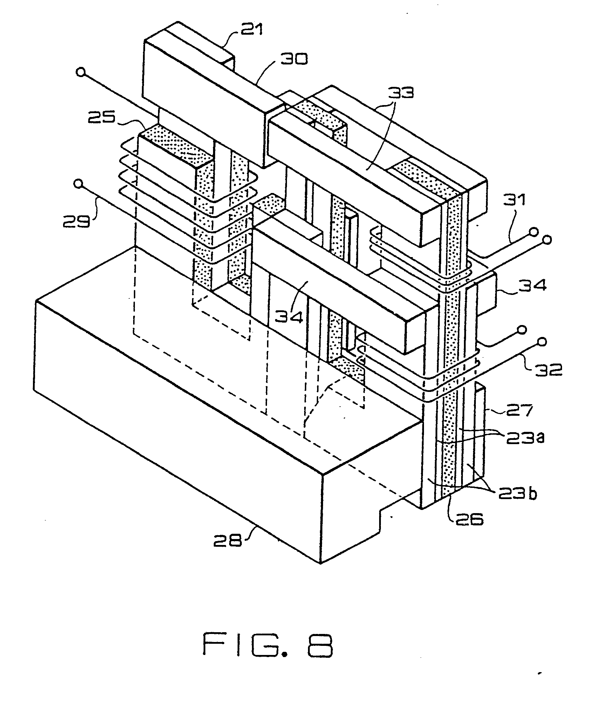

Detailed construction of a magnetic head assembly being most suitable for the above-mentioned flexible disc device will now be described with reference to Figs. 8—11.

The magnetic head assembly in prior art and an embodiment of the invention, already described briefly referring to Figs. 4 and 5, will be further described in comparison to conventional structure.

In Fig. 4 showing the conventional structure, the erasing head core 23 has the erasing gap 24 disposed on both sides of the record regeneration head core. In order to prevent the record regenerative gap 22 from taking the noise component caused by shift of track position, the erasing gap 24 serves to energize the erasing head core 23 and erase the record track side surface uniformly so as to erase noise at peripheral portion of the record data. The non-magnetic spacers 25, 26 constitute a medium sliding surface. The slide shoes 27, 28 hold the head cores 21, 23 and the non-magnetic spacers 25, 26 and constitute a medium sliding surface.

In order to improve the track density, the positioning mechanism such as the stepping motor for positioning the head assembly onto medium is arranged at fine positioning pitch and at the same time the track width of the record regenerative head core 21 and the erasing head core 23 in the head assembly is reduced. That is, if the track density is doubled, the track width of the record regenerative head core 21 and the erasing head core 23 will be nearly halved. These head assemblies are used individually for respective flexible disc devices.

Regarding the compatibility between devices or media being different in the track width, in prior art, information of 48 TPI written in the same medium property, i.e. the same line recording density can be read by a device of 96 TPI. This is because the center position of track of 48 TPI coincides with the center position of track of even number of 96 TPI.

On the contrary, information recorded in a device of 96 TPI cannot be regenerated by a device of 48 TPI in the prior art. If information is written only in track of even number in 96 TPI, effective width of information track becomes 1/2 but appreciable trouble does not occur. However, various noise such as old information in track position of odd number is read only by wide head of 48 TPI in this state, and the disturbing noise decreases the signal-to-noise ratio.

The head asembly for flexible disc device as an embodiment of the invention already described briefly will be hereinafter described further in detail referring to Fig. 5 showing a plan view of medium sliding surface of the head assembly and Fig. 8 showing a perspective view of core assembling portion of the head assembly.

This embodiment realizes the writing and reading in track density of 48 TPI and 96 TPI in one head assembly. The head assembly comprises the writing/reading head core 21 set to the track width for 96 TPI, a pair of erasing head cores 23a, 23a energized at recording state of 96 TPI and 48 TPI, and a pair of erasing gaps 24a, 24a therefor. A pair of erasing head cores 23b, 23b are energized only at recording state of 48 TPI, and have a pair of erasing gaps 24b, 24b. The erasing head cores 23b, 23b are disposed outside the erasing head cores 23a, 23a as shown in Fig. 5.

In Fig. 8, the writing/reading head core 21 is provided with a coil 29 and a closing core 30 adhered thereto, thus the magnetic circuit is constituted. In similar manner, a pair of head cores 23a, 23a are provided with an erasing coil 31 and a pair of closing cores 33, 33 adhered thereto, and a pair of erasing head cores 23b, 23b are provided with an erasing coil 32 and a closing core 34 adhered thereto, thus respective magnetic circuits are constituted.

The head assembly is moved and positioned in the direction of disc diameter by the stepping motor as track positioning mechanism.

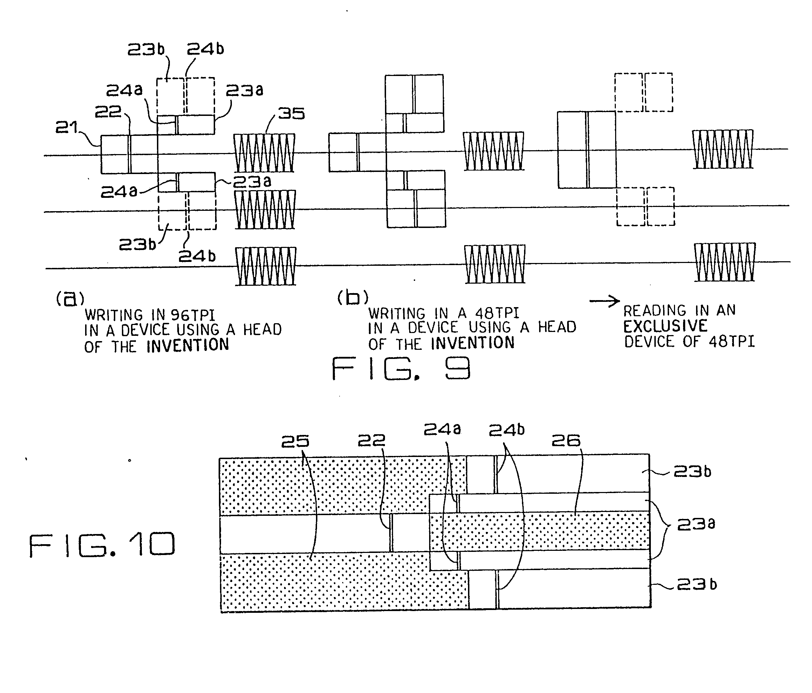

Fig. 9 is a diagram illustrating the writing/reading state by the head assembly as an embodiment of the invention. When the head assembly is used for 96 TPI, since density of record data signal 35 is high at the writing state as shown in Fig. 9(a), only a pair of erasing head cores 23a, 23a are operated and a pair of erasing head cores 23b, 23b outside the track are not energized in order to prevent the erasing head from erasing the adjacent data signal.

When the head assembly as an embodiment of the invention is used for 48 TPI, two pairs of erasing head cores 23a, 23a, 23b, 23b are simultaneously energized at the writing state and written by the writing/reading head core 1 as shown in Fig. 9(b). If the information thus recorded is read out by an exclusive device for 48 TPI, output signal is decreased because of the narrowed track width in comparison to data signal recorded by the exclusive device for 48 TPI. But the output signal is sufficient as long as it is over a definite value.

Moreover, when the recording is effected for 48 TPI using the head assembly as an embodiment of the invention, since the disc contacing with the wide reading head of the exclusive device for 48 TPI is widely erased by the head cores 23a, 23a, 23b, 23b, noise component is not reproduced in the wide reading head and reduction of the signal-to-noise ratio is about a half being in region not to produce any problem as an ordinary device exclusive for 48 TPI.

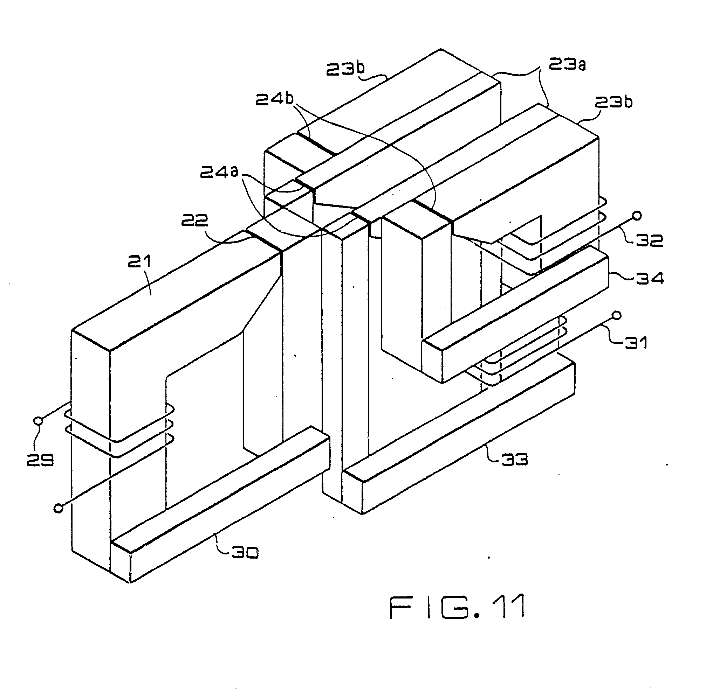

Fig. 10 is a view showing only head core portion as another embodiment of the invention, and Fig. 11 is a perspective view of the core portion of Fig. 10. In both figures, like reference characters of Fig. 5 and Fig. 8 denote the same or like parts.

When a device for 96 TPI is used to energize only a pair of erasing head cores 23a, 23a, magnetic flux may flow also to a pair of erasing head cores 23b, 23b and strong magnetic field be generated in a pair of erasing gaps 24b, 24b and data in the track adjacent to 96 TPI be erased. This embodiment intends to prevent such situation. The erasing head cores 23b, 23b outside the gaps 24b, 24b of the erasing head cores 23a, 23a are separated from the writing/reading head core 21 so that the gaps 24a, 24a, 24b, 24b of two pairs of the erasing head cores 23a, 23a, 23b, 23b are not aligned. Thereby magnetic reluctance of the gaps 24b, 24b of the outer erasing head cores 23b, 23b with respect to the external magnetic field is made relatively large.

According to the embodiments of the present invention as above described, the medium can be mutually used between devices being different in the track density by changing the erasing heads of the head assembly, and device of high track density and conventional device of low track density may be used in combination, thereby the economical effect is large.

The spirit of the present invention can be clearly understood from the above description by those skilled in the art. For the purpose of better understanding, however, additional explanation will be hereinafter carried out regarding a notch or a hole of a flexible disc jacket, means for detecting the notch or the hole optically or mechanically, and means for discriminating the track density of the flexible disc medium in the direction of diameter utilizing a host computer, all being known as the prior art.

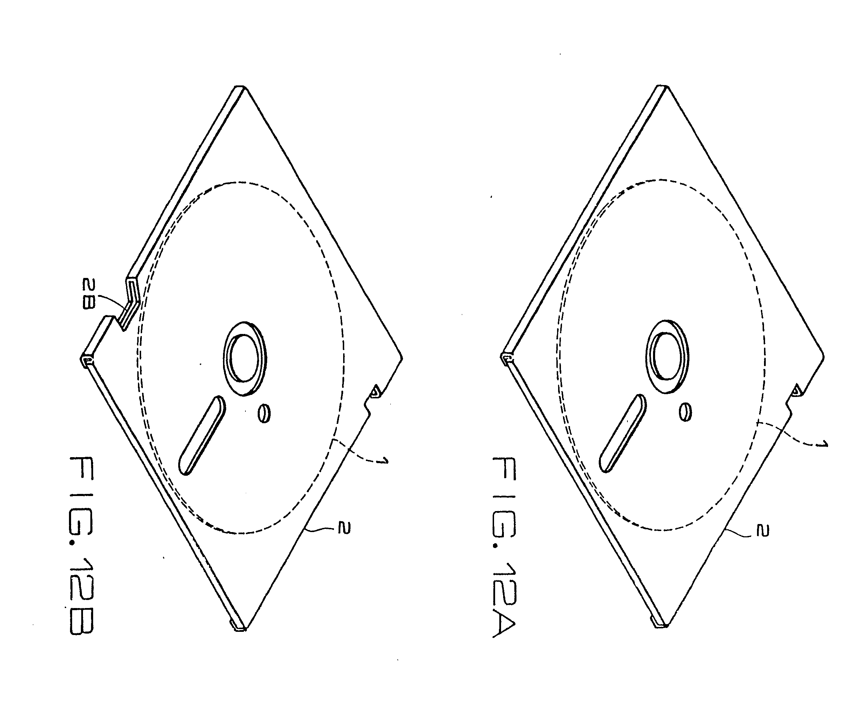

Fig. 12A is a perspective view of a whole jacket including a flexible disc medium of 48 TPI or 96 TPI in the prior art. The jacket in this state cannot discriminate 48 TPI or 96 TPI. Fig. 12B is a perspective view of a whole jacket including a flexible disc medium indicating the exclusive use for 96 TPI. Numeral 2B designates a notch to enable the designation of 96 TPI. The jacket without notch at a prescribed position is discriminated as 48 TPI, the jacket having a notch is discriminated as 96 TPI.

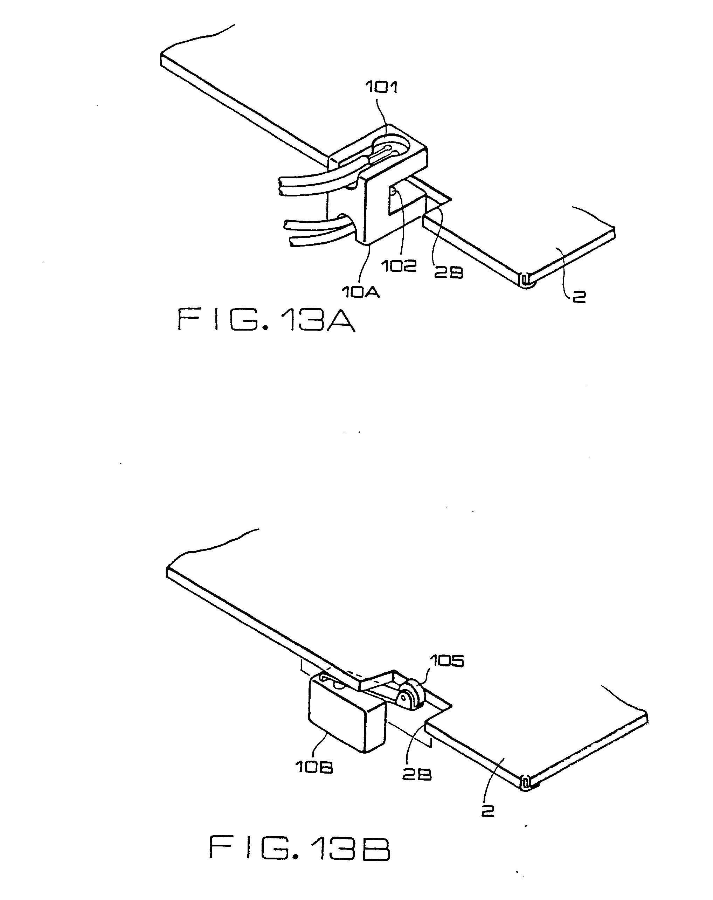

Figs. 13A and 13B are schematic diagram illustrating the optical and mechanical means for detecting the notch as shown in Figs. 12A and 12B. In Fig. 13A, an optical medium discrimination detector 10A comprises a light emitting diode 101 and a light receiving element 102 formed in a pair. The jacket 2 is inserted in a prescribed position, so that the notch 2A of the jacket 2 is not grasped at a position between the light emitting diode and the light receiving element. In this constitution, the jacket as shown in Fig. 12A without notch 2B for 48 TPI is shielded from the light thereby the light receiving element does not respond. If the jacket has the notch 2B the light receiving element acts in response to the light from the light emitting diode and discriminates 96 TPI.

In Fig. 13B, a medium discrimination detector 10B comprises a microswitch. The jacket 2 is inserted in a prescribed position, so that the notch 2B is disposed to a sensor 105 of the medium discrimination detector 10B. In this constitution, the jacket as shown in Fig. 12A without notch 2B for 48 TPI pushes the sensor of the medium discrimination detector 10B comprising the microswitch, thereby the jacket is indicated as that for 48 TPI. If the jacket for 96 TPI having the notch 2B is not inserted, the sensor is not pushed and the switch changing of the medium discrimination detector is not carried out, thereby the jacket is indicated as that for 96 TPI.

## Claims

1. A magnetic storage device for receiving a flexible disc record medium, comprising
a magnetic head (7) having writing/reading (21) and erasing cores (23a, 23b);
a spindle motor (3) for rotating an inserted record medium (1) at a predetermined rotating speed determined by a spindle motor drive circuit;
magnetic head positioning means (5, 6, 8, 9) for positioning the magnetic head (7) in radial direction of the record medium (1) to any track on the record medium; and
track density discrimination means (10) for recognizing the track density type of an inserted record medium (1);
characterized in that the effective track width of the magnetic head (7) is electrically changeable to one of a plurality of different erase track widths by electrically selecting said erasing cores (23a, 23b) contained in the magnetic head (7), and that, in the writing state, the erase track width of the magnetic head (7) is selected in accordance with the discrimination signal of the track density discrimination means (10).

2. A magnetic storage device according to claim 1, being adapted for receiving one of two different types of recording media (1) having either high or low track density, in which the writing/reading core (21) of the magnetic head (7) is provided with a writing/reading gap (22), and in which a first pair of said erasing cores (23a) comprises erasing gaps (24a) at both sides to the writing/reading core (21), characterized in that a second pair of said erasing cores (23b) is provided having erasing gaps (24b) at both sides adjacent to the first pair of erasing cores (23a);
that in case of a record medium (1) having a high track density only the first pair of erasing cores (23a) is energized, whereas in case of a record medium (1) having a low track density both pairs of erasing cores (23a, 23b) are energized; and
that the energization of the erasing cores (23a, 23b) is selected in accordance with the discrimination signal of the track density discrimination means (10).

3. A magnetic storage device according to claim 1, in which said magnetic head positioning means (5, 6, 8, 9) comprises a step motor (5) driven by step pulses, characterized in that for record media (1) having lower track density, the frequency of the step pulses is increased by a multiple integer of the frequency of step pulses for a record medium (1) having higher track density, the changing of frequency being selected by discrimination signals of the track density discrimination means (10).

4. A magnetic storage device according to claim 1, characterized in that the track density discrimination means (10) is adapted to detect a notch (2B) or a hole formed on a jacket (2) of the record medium (1).

5. A magnetic storage device according to claim 1, characterized in that said track density discriminating means comprises means for reading the content of data already recorded on the recording medium (1), and interpreting and deciding on the content of data.

6. A magnetic storage device as set forth in claim 5, characterized in that said interpreting and deciding is executed by a host computer (14).

7. A magnetic storage device as set forth in claim 1, characterized in that the predetermined rotating speed of the spindle motor (3) is changed in accordance with the discrimination signal from the track density discrimination means (10).

8. A magnetic head assembly for a magnetic storage device according to any of the claims 1 to 7, characterized in that the two pairs of erasing head gaps (24a, 24b) are displaced relative to each other in track direction so that the inner gaps (24a) and the outer gaps (24b) are not aligned.

9. A magnetic head assembly according to claim 8, characterized in that the two pairs of erasing head gaps (24a, 24b) are displaced by at least 0,2 mm.

10. A magnetic head assembly according to claim 8 or 9, characterized in that the writing/reading head core (21) is provided with a writing/reading coil (29) and a closing core (30) adhered thereto, that the first erasing head core (23a) is provided with an erasing coil (31) on a leg at higher position and a closing core (33) adhered thereto, that the second erasing core (23b) is provided with an erasing coil (32) on a leg at lower position and a closing core (34) adhered thereto, and that these cores are held by slide shoes (27, 28) through non-magnetic spacers (25).

**Patentansprüche**

1. Magnetspeichereinheit zur Aufnahme einer flexiblen Diskette,
mit einem Magnetkopf (7), der Schreib/Lese-(21) und Löschkerne (23a, 23b) aufweist;
. mit einem Spindelmotor (3) zum Rotieren eines eingesetzten Aufzeichnungsträgers (1) mit einer bestimmten Drehzahl, die durch eine Spindelmotor-Ansteuerschaltung bestimmt wird;
mit einer Magnetkopf-Positioniereinrichtung (5, 6, 8, 9) zum Positionieren des Magnetkopfes (7) in radialer Richtung des Aufzeichnungsträgers (1) gegenüber jeder der Spuren des Aufzeichnungsträgers; und mit einem Spurendichten-Diskriminator (10) zum Erkennen der Spurendichtentype des Aufzeichnungsträgers (1);
dadurch gekennzeichnet, daß die effektive Spurenbreite des Magnetkopfes (7) auf eine von mehreren verschiedenen Löschkern-Spurenbreiten elektrisch dadurch umschaltbar ist, daß die in dem Magnetkopf (7) enthaltenen Löschkerne (23a, 23b) elektrisch ausgewählt werden; und

daß im Schreibbetrieb die Löschkern-Spurbreite des Magnetkopfes (7) in Übereinstimmung mit dem Diskriminatorsignal des Spurendichten-Diskriminators (10) ausgewählt wird.

2. Magnetspeichereinheit nach Anspruch 1, die zur Aufnahme von jeweils einer von zwei verschiedenen Typen von Aufzeichnungsträgern (1) mit entwder hoher oder niedriger Spurendichte ausgebildet ist, bei der der Schreib/Lesekern (21) des Magnetkopfes (7) einen Schreib/Lesespalt (22) aufweist und bei der ein erstes Paar der Löschkerne (23a) Löschspalte (24a) zu beiden Seiten des Schreib/Lesekerns (21) enthält, dadurch gekennzeichnet, daß ein zweites Paar von Löschkernen (23b) vorgesehen ist, deren Löschspalte (24b) zu beiden Seiten neben dem ersten Paar von Löschkernen (23a) angeordnet sind;
daß bei einen Auzeichnungsträger (1) mit hoher Spurendichte nur das erste Paar von Löschkernen (23a) erregt wird, während bei einem Aufzeichnungsträger (1) mit niedriger Spurendichte beide Paare von Löschkernen (23a, 23b) erregt werden; und
daß die Erregung der Löschkerne (23a, 23b) in Übereinstimmung mit dem Diskriminator-Signal des Spurendichten-Diskriminators (10) erfolgt.

3. Magnetspeichereinheit nach Anspruch 1, bei der die Magnetkopf-Positioniereinrichtung (5, 6, 8, 9) einen durch Schrittimpulse angetriebenen Schrittmotor (5) enthält,
dadurch gekennzeichnet, daß bie einem Aufzeichnungsträger (1) mit niedrigerer Spurendichte die Frequenz der Schrittimpulse durch ein ganzes Vielfaches gegenüber der Frequenz für einen Aufzeichnungsträger (1) mit höherer Spurendichte erhöht wird, und
daß der Wechsel der Frequenz durch Diskriminatorsignale des Spurendichten-Diskriminators (10) erfolgt.

4. Magnetspeichereinheit nach Anspruch 1, dadurch gekennzeichnet, daß der Spurendichten-Diskriminator (10) zur Abtastung einer Kerbe (2B) oder eines Loches in der Schutzhülle (2) des Aufzeichnungsträgers ausgebildet ist.

5. Magnetspeichereinheit nach Anspruch 1, dadurch gekennzeichnet, daß der Spurendichten-Diskriminator Mittel zum Lesen des Inhalts der auf dem Aufzeichnungsträger (1) gespeicherten Daten enthält, und
daß der Inhalt dieser Daten ausgewertet und zur Entscheidung herangezogen wird.

6. Magnetspeichereinheit nach Anspruch 5, dadurch gekennzeichnet, daß Auswertung und Entscheidung durch einen Host-Rechner (14) durchgeführt werden.

7. Magnetspeichereinheit nach Anspruch 1, dadurch gekennzeichnet, daß die vorbestimmte Drehzahl des Spindelmotors (3) in Übereinstimmung mit dem Diskriminatorsignal des Spurendichten-Diskriminators (10) gewechselt wird.

8. Magnetkopfanordnung dür eine Magnetspeichereinheit nach einem oder mehereren der Ansprüche 1 bis 7, dadurch gekennzeichnet, daß die beiden Paare von Löschspalten (24a, 24b) gegeneinander in Spurrichtung versetzt sind, so daß die inneren Spalte (24a) und äußeren Spalte (24b) nicht zueinander ausgerichtet sind.

9. Magnetkopfanordnung nach Anspruch 8, dadurch gekennzeichnet, daß die beiden Paare von Löschspalten (24a, 24b) um mindestens 0,2 mm gegeneinander versetzt sind.

10. Magnetkopfanordnung nach Anspruch 8 oder 9, dadurch gekennzeichnet, daß der Schreib/Lesekern (21) eine Schreib/Lesewicklung (29) und einen angeklebten Abschlußkern (30) aufweist;

daß der erse Löschkern (23a) eine Löschwicklung (31) auf einem Schenkel in höherer Position und einen angeklebten Abschlußkern (33) aufweist;

daß der zweite Löschkern (23b) eine Löschwicklung (32) auf einem Schenkel in niedriger Position und einen angeklebten Abschlußkern (34) aufweist; und

daß diese Kerne durch Gleitschuhe (27, 28) mittels nichtmagnetischer Abstandsstücke (25) gehalten sind.

**Revendications**

1. Dispositif de mémoire magnétique destiné à recevoir un support d'enregistrement en forme de disque souple, comportant

une tête magnétique (7) possédant des noyaux d'enregistrement/lecture (21) et d'effacement (23a, 24b);

un moteur (3) d'entraînement d'une broche, servant à entraîner en rotation un support d'enregistrement (1) inséré, à une vitesse de rotation prédéterminée, fixée par un circuit de commande du moteur d'entraînement de la broche;

des moyens (5, 6, 8, 9) de positionnement de la tête magnétique, servant à positionner la tête magnétique (7) dans une direction radiale du support d'enregistrement (1) sur n'importe quelle piste située sur ce support d'enregistrement; et

des moyens (10) de discrimination de la densité des pistes pour identifier le type de densité de pistes d'un support d'enregistrement (1) inséré; caractérisé en ce que le largeur effective de pistes de la tête magnétique (7) peut être changée électriquement en une largeur choisie parmi différentes largeurs de pistes d'effacement, par une sélection électrique desdits noyaux d'effacement (23a, 23b) contenus dans le tête magnétique (7); et en ce que, dans l'état d'enregistrement, la largeur de la piste d'effacement de la tête magnétique (7) est choisie conformément au signal de discrimination des moyens (10) de discrimination de la densité des pistes.

2. Dispositif de mémoire magnétique selon la revendication 1, adapté pour recevoir l'un de deux types différents de support d'enregistrement (1), possédant soit une densité élevée, soit une faible densité de pistes, dans lequel le noyau d'enregistrement/lecture (21) de la tête magnétique (7) comporte un entrefer d'enregistrement/lecture (22), et dans lequel un premier couple de noyaux d'effacement (23a) comporte des entrefers d'effacement (24a) situés des deux côtés du noyau d'enregistrement/lecture (21), caractérisé en ce qu'il est prévu un second couple de noyaux d'effacement (23b), possédant des entrefers d'effacement (24b) situés des deux côtés, dans une position adjacente au premier coule de noyaux d'effacement (23a);

en ce que, dans le cas d'un support d'enregistrement (1) possédant une densité élevée de pistes, seul le premier couple de noyaux d'effacement (23a) est excité, tandis que dans le cas d'un support d'enregistrement (1) possédant une faible densité de pistes, les deux couples de noyaux d'effacement (23a, 23b) sont excités; et en ce que l'excitation des noyaux d'effacement (23a, 23b) est choisie conformément au signal de discrimination des moyens (10) de discrimination de la densité de pistes.

3. Dispositif de mémoire mangétique selon la revendication 1, dans lequel lesdits moyens (5, 6, 8, 9) de positionnement de la tête magnétique comprennent un moteur pas-à-pas (5) entraîné par des impulsions d'avance pas-à-pas, caractérisé en ce que pour des supports d'enregistrement (1) possédant une densité de pistes inférieure, la fréquence des impulsions d'avance pas-à-pas est accrue d'un multiple entier de la fréquence des impulsions d'avance pas-à-pas prévue pour un support d'enregistrement (1) possédant une densité de pistes supérieure, la modification de la fréquence étant choisie par les signaux de discrimination des moyens (10) de discrimination de la densité de pistes.

4. Dispositif de mémoire mangétique selon la revendication 1, caractérisé en ce que les moyens (10) de discrimination de la densité de pistes sont cançus pour détecter une encoche (28) ou un trou ménagé dans un étui (2) du support d'enregistrement (1).

5. Dispositif de mémoire magnétique selon la revendication 1, caractérisé en ce que lesdits moyens de discrimination de la densité de pistes comprennent des moyens pour lire le contenu des données déjà enregistrées sur le support d'enregistrement (1) et pour interpréter et déterminer le contenu des données.

6. Dispositif de mémoire magnétique selon la revendication 5, caractérisé en ce que ladite interprétation et ladite détermination sont établies par un ordinateur principal (14).

7. Dispositif de mémoire selon la revendication 1, caractérisé en ce que la vitesse de rotation prédéterminée du moteur (3) d'entraînement de la broche est modifiée conformément au signal de discrimination délivré par les moyens (10) de discrimination de la densité de pistes.

8. Ensemble formant tête mangétique pour un dispositif de mémoire magnétiques selon l'une quelconque des revendications 1 à 7, caractérisé en ce que les deux couples d'entrefers d'effacement (24a, 24b) sont déplacés l'un par rapport à l'autre dans la direction des pistes pour que les entrefers intérieurs (24a) et les entrefers extérieurs (24b) ne soient pas alignés.

9. Ensemble formant tête magnétique selon la revendication 8, caractérisé en ce que les deux couples d'entrefers d'effacement (24a, 24b) sont décalés d'au moins 0,2 mm.

10. Ensemble formant tête magnétique selon la revendication 8 ou 9, caractérisé en ce que le noyau (21) de la tête d'enregistrement et de lecture comporte une bobine d'enregistrement/lecture (29) et un noyau de fermeture (30) fixé au noyau d'enregistrement/lecture, en ce que le premier noyau (23a) de la tête d'effacement comporte une bobine d'effacement (31) sur une branche située dans une position supérieure et un noyau de fermeture (33) fixé au noyau d'effacement, en ce que le second noyau d'effacement (23b) comporte une bobine d'effacement (32) sur une branche située dans une position plus basse et un noyau de fermeture (34) fixé au noyau d'effacement, et en ce que ces noyaux sont maintenus par des patins glissants (27, 28) par l'intermédiaire d'entretoises amagnétiques (25).

0 110 050

(PERIPHERAL CIRCUIT) B

(ELEMENT) A

FIG. 1

(PRIOR ART)

FIG. 2

HEAD1
HEAD0

PERIPHERAL
CIRCUIT

HOST
COMPUTER

0 110 050

FIG. 3

| Block | Label |
|---|---|
| (PERIPHERAL CIRCUIT) 12 | |
| (ELEMENT) 10 | |

HOST COMPUTER — 14

SIGNAL CON-NECTOR — 13

MEDIUM SETTING ERROR DETECTING CIRCUIT — MEDIUM DISCRIMINATION DETECTOR (TPI)

INDEX DETECTING CIRCUIT — ROTATION INDEX DETECTOR

ROTATING SPEED DETECTING CIRCUIT (READY)

HEAD LOAD DRIVING CIRCUIT — HEAD LOAD SOLENOID

ERASE DRIVING CIRCUIT — 71, 72 — WRITING/READING HEAD 0,1 — 7

WRITING READING CIRCUIT

HEAD 0/1 SELECTING CIRCUIT

RECORD PERMISSION NOTCH DETECTING CIRCUIT — RECORD PER-MISSION NOTCH DETECTOR

TRACK OO DETECTING CIRCUIT — TRACK OO DETECTOR

INDICATOR DRIVING CIRCUIT — PANEL INDICATOR

STEP MOTOR DRIVING CIRCUIT — 5, 51 — STEP MOTOR

DEVICE NUMBER SELECTING CIRCUIT — 11 — ROTATING SPEED DETECTOR

DC SPINDLE MOTOR DRIVING CIRCUIT — 3 — DC SPINDLE MOTOR

FIG. 4
(PRIOR ART)

FIG. 5

FIG. 7

4

FIG. 6

WRITE GATE SIGNAL

'0'
'1'    WRITE

TIMER (1)

TIMER (2)

OFF
ON     ERASE A

TIMER (3)

TIMER (4)

OFF
ON
48TPI    96TPI
ERASE WIDTH B

TRACK DENSITY
CHANGING SIGAL

TIMER (1)
TIMER (2)
INVERTER
INVERTER
AND GATE
OR GATE
ERASE (A)

TIMER (3)
TIMER (4)
INVERTER
AND GATE
OR GATE
AND GATE
ERASE (B)

0 110 050

FIG. 8

(a)
WRITING IN 96TPI
IN A DEVICE USING A HEAD
OF THE **INVENTION**

(b)
WRITING IN A 48TPI
IN A DEVICE USING A HEAD
OF THE **INVENTION**

→ READING IN AN
**EXCLUSIVE**
DEVICE OF 48TPI

FIG. 9

FIG. 10

0 110 050

23b    23a

24b    23b

24a

22

21    32

34

29    31

33

30

# FIG. 11

FIG. 12A

FIG. 12B

FIG. 13A

FIG. 13B